# FASCICULE DE BREVET EUROPEEN

(11) **EP 0 985 918 B1**
(45) Date de publication et mention de la délivrance du brevet: **03.08.2005**
(21) Numéro de dépôt: 99402213.5
(22) Date de dépôt: 09.09.1999
(51) Int. Cl.: G01L 5/10

(54) **Mesure et contrôle de la tension d'une courroie avec des courbes de correspondance**
Messen und Kontrolle einer Riemenspannung mit Vergleichskurven
Measuring and checking the tension of a belt with corresponding curves

(30) Priorité: 11.09.1998 FR 9811365
(43) Date de publication de la demande: 15.03.2000
(73) Titulaire: SKF FRANCE, F-92140 Clamart (FR)
(72) Inventeur: Verger, Frédéric, 35510 Cesson-Sevigne (FR)
(74) Mandataire: Dossmann, Gérard

(56) Documents cités:
- WO-A-90/05288
- FR-A- 2 617 282
- FR-A- 2 637 372

## Description

La présente invention concerne les dispositifs et les procédés de contrôle et de mesure de la tension d'une courroie, par exemple une courroie de distribution ou bien encore une courroie d'alternateur utilisée dans les véhicules automobiles.

La connaissance précise de la tension dans une courroie d'entraînement est particulièrement importante car ce paramètre conditionne le fonctionnement correct et la durée de vie de la courroie et influe donc sur le bon fonctionnement des organes mécaniques tributaires d'une telle courroie.

On sait, par exemple, que pour les courroies de distribution utilisées dans les moteurs de véhicule automobile, l'utilisation d'une courroie incorrectement tendue (trop ou pas assez) peut conduire à une usure prématurée de la courroie et à sa rupture, avec pour conséquence la destruction du moteur.

Il existe déjà un certain nombre de dispositifs de contrôle de tension de courroie qui comportent un bloc de détection et un boîtier de traitement du signal et d'affichage des résultats, ledit bloc et ledit boîtier étant reliés par un câble.

Le principe généralement adopté par ces dispositifs consiste à mettre une face de la courroie tendue en appui contre deux appuis fixes du bloc de détection, l'autre face de la courroie étant en contact sur un appui mobile et de déplacer l'appui mobile d'une valeur connue par rapport aux appuis fixes et dans une direction tendant à plaquer la courroie sur les appuis fixes, et à la déformer transversalement entre ceux-ci, la réaction de la courroie sur l'appui mobile étant mesurée par des moyens appropriés, par exemple par des jauges de contrainte disposées sur le support de l'appui mobile.

On comprendra que pour une déformation transversale donnée de la courroie, la réaction de la courroie sur l'appui mobile sera proportionnelle à la tension effective de la courroie mais dépendra aussi des paramètres liés aux propriétés géométriques et mécaniques de la courroie.

On détecte et on mesure ainsi une valeur représentative de la tension de la courroie, mais non la tension de la courroie par elle-même.

Le document FR 2 617 282 illustre la réalisation d'un tel dispositif.

De tels types de dispositifs présentent toutefois certains inconvénients.
- La mesure indiquée par le boîtier de lecture n'indique pas la tension de la courroie et oblige à recourir à des tables afin d'établir une correspondance entre la valeur lue et la tension réelle.
- La valeur trouvée nécessite de connaître également la valeur requise afin de savoir si la courroie est bien tendue, trop tendue ou pas assez tendue.
- Il est d'autre part nécessaire de procéder à des changements d'éléments tels que les vis de pression pour chaque épaisseur de courroie différente à mesurer.

Le document WO-A-90/05288 décrit un tensiomètre destiné à la détermination de la tension dans une courroie de transmission ou de convoyage, pourvue de jauges de contrainte connectées électriquement à un pont dont la sortie est reliée à un connecteur d'interface. La sonde de déplacement est reliée à un étage comparateur à seuil dont la sortie est également reliée au connecteur d'interface. Un ordinateur portable tel qu'un organisateur « psion » peut être relié au connecteur d'interface pour permettre l'enregistrement des valeurs instantanées de sortie. L'ordinateur portable est préprogrammé avec des données relatives aux caractéristiques de la courroie et à sa géométrie, par exemple les dimensions et l'espacement entre les poulies autour desquelles la courroie est entraînée de façon qu'il soit capable de comparer les valeurs mesurées avec des valeurs théoriques applicables à la courroie et à la géométrie de courroie en question et à indiquer dans quelle mesure la courroie est sous tendue ou sur tendue.

Le document FR A 2 637 372 décrit un dispositif pour mesurer et contrôler la tension d'une courroie utilisant une déformation constante avec mesure de la force exercée sur un moyen faisant office de jauge de contrainte, comprenant un boîtier pourvu de trois points d'appui situés du même côté de la courroie avec deux doigts presseurs venant en regard des deux points d'appui extrêmes. Toutefois, ce dispositif encombrant est relativement complexe. Il fait en outre appel à des sources d'énergie extérieures pour l'alimentation des vérins, ce qui limite l'autonomie du dispositif.

L'invention a pour objet de proposer un dispositif compact et simple à utiliser par l'opérateur, en évitant les multiples réglages initiaux des systèmes connus, ces réglages constituant une source potentielle d'imprécision, de manque de fiabilité ou d'erreurs dans les mesures.

Le dispositif de mesure et de contrôle de la tension d'une courroie, selon l'invention, comprend un bloc de détection et un boîtier de contrôle et de commande, le bloc de détection comprenant un premier et un second points d'appui aptes à venir en contact avec une face d'une courroie, un troisième point d'appui disposé entre les deux premiers et apte à venir en contact avec une face opposée de la courroie, des moyens de déplacement relatif du troisième point d'appui par rapport aux deux premiers points d'appui pour exercer sur la courroie un effort transversal tendant à la plaquer sur les deux premiers points d'appui, et des moyens de mesure de la réaction de la courroie sur le troisième point d'appui. Le boîtier de contrôle et de commande comprend un microcontrôleur, une mémoire, des courbes de correspondance entre la réaction de la courroie sur le troisième point d'appui et la tension de courroie pour chaque type de courroie stockées dans ladite mémoire, des moyens pour mettre en mémoire les caractéristiques de la courroie à mesurer, et un algorithme de calcul permettant au microcontrôleur de déterminer la tension préconisée en fonction du type de courroie contrôlé. Les moyens de déplacement relatif du troisième point d'appui par rapport aux deux premiers points d'appui agissent, en contact avec la courroie, sur une course égale à la somme de l'épaisseur de la courroie et d'une constante L.

Dans un mode de réalisation de l'invention, le dispositif comprend des moyens d'affichage de la tension calculée de la courroie.

Avantageusement, le microcontrôleur est apte à comparer la tension calculée de la courroie à la tension préconisée de la courroie. Le dispositif peut comprendre des moyens d'affichage du résultat de la comparaison.

Dans un mode de réalisation de l'invention, le premier et le second points d'appui sont fixes par rapport au bloc de détection, le troisième point d'appui étant mobile par rapport aux deux premiers.

Dans un autre mode de réalisation de l'invention, le troisième point d'appui est fixe par rapport au bloc de détection, le premier et le second points d'appui étant mobiles par rapport au troisième point d'appui.

Dans un mode de réalisation de l'invention, le premier et le second points d'appui sont éloignés l'un de l'autre d'une distance fixe.

Dans un mode de réalisation de l'invention, le dispositif comprend un moyen d'arrêt des moyens de déplacement relatif du troisième point d'appui par rapport aux deux premiers points à la fin de la course, en contact avec la courroie, égale à la somme de l'épaisseur de la courroie et de la constante L.

Avantageusement, les moyens de déplacement relatif du troisième point d'appui comprennent un ensemble vis/écrou actionné par un bouton moleté axialement solidaire du bâti.

Dans un mode de réalisation de l'invention, le dispositif comprend un moyen d'affichage indiquant une tension de courroie trop faible, correcte ou trop forte, le dit moyen d'affichage étant pourvu de voyants lumineux auxquels sont affectés des codes de couleur.

La valeur de la tension de courroie peut être affichée en daN.

Dans un mode de réalisation de l'invention, le boîtier de contrôle et de commande regroupe les commandes et des moyens d'affichage.

Le contact entre une courroie et les points d'appui s'effectuent, de préférence, sur toute la largeur de la courroie.

La présente invention a également pour objet un procédé de mesure et de contrôle de la tension d'une courroie entre un premier et un second points d'appui aptes à venir en contact avec une face d'une courroie, un troisième point d'appui disposé entre les deux premiers et apte à venir en contact avec une face opposée de la courroie, le troisième point d'appui étant apte à un déplacement relatif sur une course connue égale à la somme de l'épaisseur de la courroie et d'une constante L avec arrêt en butée à une distance constante par rapport aux deux premiers points d'appui pour exercer sur la courroie un effort transversal tendant à la plaquer sur les deux premiers points d'appui, la réaction de la courroie sur le troisième point d'appui étant mesurée. On stocke dans une mémoire des courbes de correspondance entre la réaction de la courroie et la tension de la courroie selon le type de courroie, on met en mémoire les caractéristiques de la courroie à mesurer, on convertit en tension de la courroie la réaction de la courroie en fonction d'une courbe sélectionnée en fonction du type de courroie , une tension préconisée de courroie étant établie au moyen d'un algorithme en fonction du type de courroie, la conversion et l'algorithme étant mis en oeuvre par un microcontrôleur disposé dans un boîtier de contrôle et de commande.

Avantageusement, on affiche la tension calculée de la courroie.

Avantageusement, on compare la tension calculée de la courroie à la tension préconisée et on affiche le résultat de la comparaison.

Ainsi, le dispositif conforme à l'invention ne demande aucun outillage de réglage ni aucun réglage mécanique particulier avant la mesure. Il permet d'obtenir de façon simple et immédiate la valeur de la tension de courroie avec une bonne précision et permet en outre de voir si cette tension est correcte par rapport à la valeur théorique. Enfin, il dispense l'utilisateur de l'utilisation de tables de conversion d'une valeur lue, simplifiant ainsi la méthode d'utilisation et fiabilisant cette dernière en évitant toute erreur de lecture ou d'interprétation.

La présente invention sera mieux comprise à l'étude de la description détaillée d'un mode de réalisation pris à titre d'exemple nullement limitatif et illustré par les dessins annexés, sur lesquels :
la figure 1 est une vue de face en élévation du dispositif conforme à l'invention;
la figure 2 est une vue de côté en élévation du dispositif conforme à l'invention;
la figure 3 est une vue semblable à la figure 1, montrant le déplacement du point d'appui mobile;
la figure 4 est une vue de face en élévation du bloc de détection et du boîtier de contrôle et de commande du dispositif conforme à l'invention; et
la figure 5 est une vue de côté en élévation d'une variante du dispositif suivant l'invention.

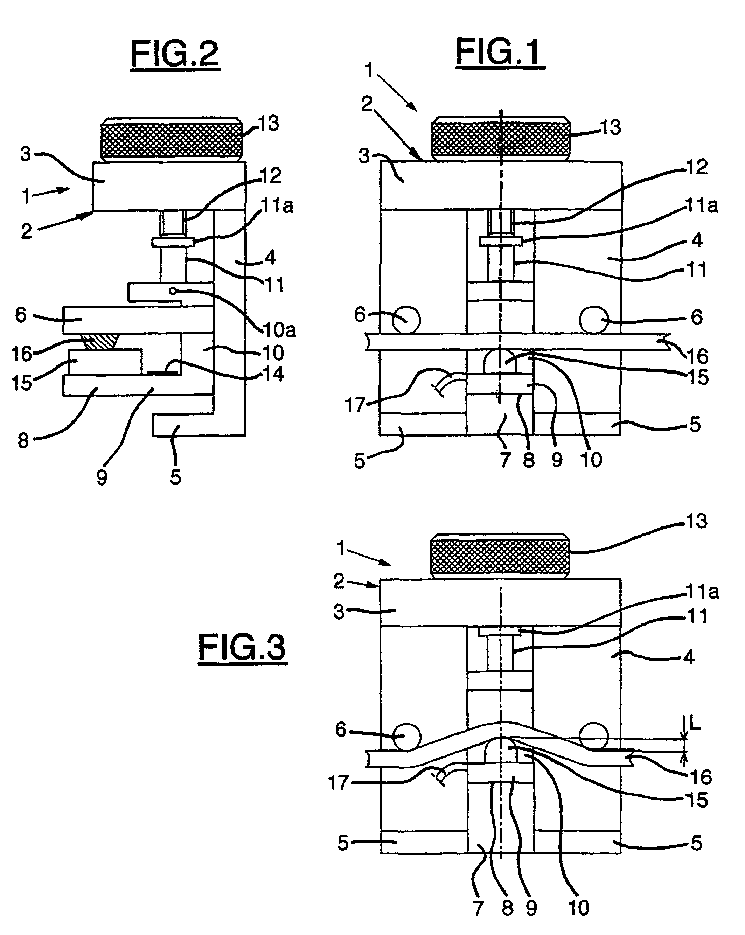

Comme on peut le voir sur les figures 1 et 2, le bloc de détection 1 comprend un bâti 2 à section en C comprenant une première branche 3 horizontale et supérieure sur les figures 1 et 2, une branche centrale 4 et une branche 5 parallèles à la branche 3. La branche centrale 4 comprend deux pions fixes 6 disposés à proximité de ses bords et s'étendant dans la même direction que les branches 3 et 5. Les axes des pions 6 sont disposés dans un plan parallèle aux branches 3 et 5. Les axes des pions 6 sont eux-mêmes parallèles. Une glissière 7 sous la forme d'une rainure centrale est prévue dans la branche centrale 4 et dans la branche inférieure 5 qui se trouve séparée en deux portions. Les pions 6 sont cylindriques et sont dimensionnés de telle sorte à pouvoir être en contact avec toute la largeur de la courroie à tester.

Dans la glissière 7, est disposé un équipage 8 mobile le long de la branche centrale 4 et perpendiculairement à un plan passant par les axes des pions 6. L'équipage mobile 8 comprend un pied 9 s'étendant parallèlement et dans la même direction que les pions 6. Le pied 9 est supporté par un élément intermédiaire 10 disposé partiellement dans la glissière 7, ledit élément intermédiaire 10 comportant également à sa partie supérieure une tige de manoeuvre 11 munie d'une butée 11a et d'une tige filetée 12. La butée 11a est surmontée par une tige filetée 12 traversant la branche supérieure 3, coopérant avec une molette 13 mobile en rotation et pourvue d'un trou taraudé, non représenté.

La molette 13 est disposée du côté de la branche supérieure 3 opposée à la branche centrale 4, la tige filetée 12 traversant la branche 3 au moyen d'un perçage non visible sur les figures 1 et 2. La tige de manoeuvre 11 étant montée non tournante sur l'élément intermédiaire 10, la rotation de la molette 13 permet ainsi d'actionner en translation l'équipage mobile 8 par rapport au boîtier 2. La butée 11a est plus large que la tige filetée 12 de façon qu'elle entre en contact avec la surface inférieure de la branche supérieure 3 à la fin du déplacement en translation de l'équipage mobile 8.

Avantageusement et afin de garantir un fonctionnement sans efforts parasites entre l'équipage mobile 8 et la glissière 7 du bâti, une liaison non rigide angulairement pourra être prévue entre la tige de manoeuvre 11 et l'élément intermédiaire 10 (liaison à pivot 10a, par exemple). Ce type de liaison contribue à éliminer des frottements parasites qui risqueraient de perturber la mesure.

Le pied 9 de l'équipage mobile 8 est pourvu d'une jauge de contrainte ou d'un pont de jauges de contrainte référencé 14 et relié par l'intermédiaire d'un câble 17 au boîtier de contrôle et de commande qui sera décrit plus loin. La jauge 14 est disposée sur la surface du pied 9 opposée au bras inférieur 5, à proximité de l'élément intermédiaire 10. Le pied 9 est également pourvu d'un élément de contact 15 disposé à l'extrémité libre du pied 9, adjacent à la jauge 14 et pourvu d'une surface supérieure arrondie. L'élément de contact 15 possède une surface de contact arrondie et est dimensionné de telle sorte à pouvoir être en contact avec toute la largeur de la courroie à tester.

Une courroie 16 est disposée entre les pions 6 qui forment des points d'appui fixes, et l'élément de contact 15 du pied 9 qui forme un point d'appui mobile. Bien entendu, on pourrait prévoir, à titre de variante, un unique point d'appui fixe et deux points d'appui mobiles.

L'opérateur entraîne alors en rotation la molette 13, ce qui provoque le déplacement de la tige filetée 12 et de l'équipage mobile 8 vers le haut, comme illustré sur la figure 3, et ce jusqu'à ce que la butée 11a entre en contact avec la surface 3a de la branche 3 opposée à la molette 13. On a alors déformé la courroie transversalement entre les deux appuis fixes en déplaçant l'équipage mobile 8 à partir de sa position de départ sur une distance connue égale à la somme de l'épaisseur de la courroie et d'une distance constante prédéterminée référencée L sur la figure 3, la position de départ étant déterminée lorsque la courroie est en contact simultané avec les points d'appui fixes et le point d'appui mobile sans que la courroie ne soit déformée transversalement entre les deux points d'appui fixes.

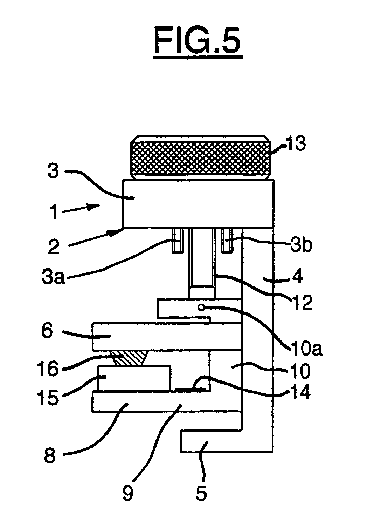

A titre de variante illustrée sur la figure 5, le dispositif comporte une tige filetée 12 qui n'est pas pourvue de butée 11a. Par contre, la branche 3 est pourvue de deux tiges filetées 3a et 3b formant des butées préréglables pour le déplacement de l'équipage mobile 8, lesdites tiges filetées étant destinées à venir en contact par leur extrémité avec la face supédeure 10b de la pièce intermédiaire 10 pour arrêter le déplacement de celle-ci en fin de course.

La distance L est ainsi prédéterminée ou préréglée une fois pour toutes lors de la fabrication du dispositif et n'est pas modifiable par l'utilisateur. On élimine de cette façon une source possible d'erreurs.

Le choix de la course de déplacement relatif des appuis lorsque ceux ci sont en contact avec la courroie, prise égale à la somme de l'épaisseur de la courroie et d'une constante L, résulte d'essais qui montrent que la course doit être au minimum égale à l'épaisseur de la courroie pour obtenir des valeurs de réaction bien différenciées en fonction des différences géométriques des courroies et, par suite, obtenir une bonne précision de mesure. A titre d'exemple, des essais ont montré qu'une valeur de constante L égale à 1 mm permet de mesurer avec une bonne précision la tension de courroies de distribution dont l'épaisseur varie de 1,7 à 2,5 mais aussi de courroies d'entraînement d'accessoires d'épaisseur comprise entre 6 et 7 mm. Une telle gamme d'épaisseur de courroies couvre les principales utilisations dans le domaine automobile.

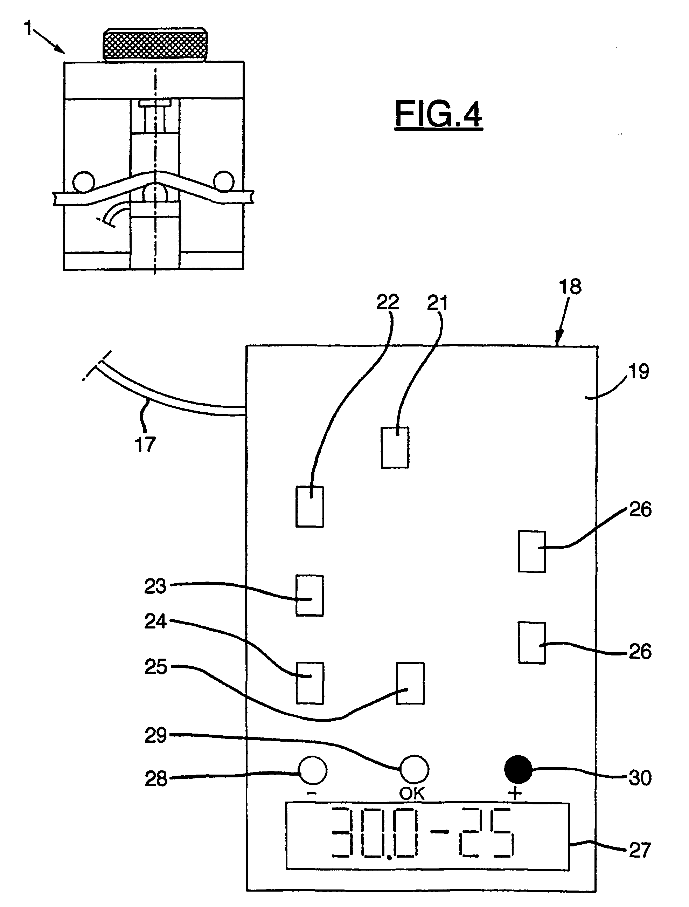

Le boîtier de contrôle et de commande 18, illustré sur la figure 4, comprend une face de commande et d'affichage 19 qui comprend un bouton 20 de mise sous tension (marche/arrêt) du dispositif, les boutons 21 à 25 de paramétrage de différentes caractéristiques de la courroie dont la tension va être déterminée, un bouton 26 commandant le démarrage de la mesure, un écran digital 27 d'affichage de la valeur de la tension de la courroie et trois voyants lumineux 28 à 30 permettant de visualiser instantanément l'état de tension de la courroie par rapport à la tension préconisée par le constructeur.

Le bouton 21 permet de sélectionner le type de courroie que l'on va tester, par exemple courroie crantée, auxiliaire, etc. Le bouton 22 permet d'indiquer la matière constituant la courroie. Le bouton 23 permet d'indiquer le profil des dents de la courroie, par exemple curviligne ou trapézoïdal. Les boutons 24 et 25 permettent de sélectionner la largeur d'une courroie synchrone et d'indiquer le nombre de stries de la courroie dans le cas de test d'une courroie striée dite "poly-V", c'est-à-dire comportant des stries longitudinales sur tout son pourtour interne. Ainsi, le boîtier regroupe les moyens de commande et d'affichage du dispositif.

Le système a en mémoire permanente les courbes de réactions par famille et type de courroie. (Ce sont des courbes de régression linéaires dans le domaine utilisé). C'est ainsi qu'une fois les paramètres de la courroie rentrés dans le système, le microcontrôleur peut identifier le type de courroie à mesurer et va se référer à la courbe de réaction correspondante qui est mémorisée en permanence et donne la valeur de tension de courroie en fonction de la valeur de la réaction de la courroie.

Le microcontrôleur calcule, d'autre part, en fonction du type de courroie, la valeur de la tension préconisée.

Le voyant lumineux 28 sera allumé lorsqu'une tension de courroie insuffisante est détectée. Le voyant lumineux 29 sera allumé en cas d'une tension de courroie satisfaisante et le voyant lumineux 30 sera allumé en cas de tension de courroie excessive par rapport à la tension préconisée pour le type de courroie dont on est en train de mesurer la tension, ce type de courroie étant déterminé par le paramétrage effectué sur les boutons 21 à 25.

On mesure ainsi une valeur représentative de la tension de la courroie, qui sera interprétée grâce au microprocesseur, non représenté, logé dans le boîtier 18, et permettra l'affichage de la tension effective de courroie sur l'écran 27 et la visualisation instantanée du niveau de tension de courroie par rapport à la tension théorique préconisée pour le type donné de courroie grâce aux voyants 28 à 30.

Le processus de mesure est le suivant :
- mettre sous tension le dispositif grâce au bouton 20,
- paramétrer le dispositif en fonction du type de courroie à contrôler grâce aux boutons 21 à 25 du boîtier 18. A cette étape, on peut faire afficher la largeur de la courroie ou le nombre de rainures sur une partie gauche de l'écran 27,
- mettre en place le bloc de détection sur la courroie,
- tourner la molette jusqu'à ce que l'équipage mobile vienne en butée, pour déformer transversalement la courroie entre les deux appuis fixes en déplaçant l'appui mobile sur une course, en contact avec la courroie, égale à la somme de l'épaisseur de la courroie et d'une constante L,
- lancer la mesure en pressant le bouton 26, et
- lire la tension mesurée de courroie qui s'affiche, par exemple en daN, sur l'écran digital 27, de préférence sur une partie droite, les parties gauche et droite étant séparées par un tiret, ainsi que l'état de la tension mesurée par rapport à la tension théorique au moyen des voyants lumineux 28 à 30.

La valeur de largeur de courroie ou du nombre de V s'affiche en clair sur l'écran digital et reste affichée en permanence jusqu'à la fin de la mesure.

Ceci permet à l'opérateur de vérifier si ce paramètre a été et reste correctement saisi.

Le dispositif suivant invention présente donc de nombreux avantages par rapport aux dispositifs de l'art antérieur, notamment sur le plan de la facilité d'utilisation par l'opérateur, de la clarté de l'affichage des paramètres contrôlés et de la fiabilité de la mesure.

## Revendications

1. Dispositif de mesure et de contrôle de la tension d'une courroie, comprenant un bloc de détection (1) et un boîtier (18) de contrôle et de commande, le bloc de détection comprenant un premier et un second points d'appui (6) aptes à venir en contact avec une face d'une courroie (16), un troisième point d'appui (15) disposé entre les deux premiers et apte à venir en contact avec une face opposée de la courroie, des moyens de déplacement relatif du troisième point d'appui par rapport aux deux premiers points d'appui pour exercer sur la courroie un effort transversal tendant à la plaquer sur les deux premiers points d'appui, et des moyens de mesure de la réaction de la courroie sur le troisième point d'appui, **caractérisé par le fait que** le boîtier de contrôle et de commande comprend un microcontrôleur, une mémoire, des courbes de correspondance entre la réaction de la courroie sur le troisième point d'appui et la tension de courroie pour chaque type de courroie stockées dans ladite mémoire, des moyens pour mettre en mémoire les caractéristiques de la courroie à mesurer, et un algorithme de calcul permettant au microcontrôleur de déterminer la tension préconisée en fonction du type de courroie contrôlé, les moyens de déplacement relatif du troisième point d'appui par rapport aux deux premiers points d'appui agissant, en contact avec la courroie, sur une course égale à la somme de l'épaisseur de la courroie et d'une constante L.

2. Dispositif selon la revendication 1, **caractérisé par le fait qu'**il comprend des moyens d'affichage (27) de la tension calculée de la courroie.

3. Dispositif selon la revendication 1 ou 2, **caractérisé par le fait que** le microcontrôleur est apte à comparer la tension calculée de la courroie à la tension préconisée de la courroie, et qu'il comprend des moyens d'affichage du résultat de la comparaison (28-30).

4. Dispositif selon l'une quelconque des revendications précédentes, **caractérisé par le fait que** le premier et le second points d'appui sont fixes par rapport au bloc de détection, le troisième point d'appui étant mobile par rapport aux deux premiers.

5. Dispositif selon l'une quelconque des revendications 1 à 3, **caractérisé par le fait que** le troisième point d'appui est fixe par rapport au bloc de détection, le premier et le second points d'appui étant mobiles par rapport au troisième point d'appui.

6. Dispositif selon l'une quelconque des revendications précédentes, **caractérisé par le fait que** le premier et le second points d'appui sont éloignés l'un de l'autre d'une distance fixe.

7. Dispositif selon l'une quelconque des revendications précédentes, **caractérisé par le fait qu'**il comprend un moyen d'arrêt des moyens de déplacement relatif du troisième point d'appui par rapport aux deux premiers points, à la fin de la course, en contact avec la courroie, égale à la somme de l'épaisseur de la courroie et de la constante L.

8. Dispositif selon l'une quelconque des revendications précédentes, **caractérisé par le fait que** les moyens de déplacement relatif du troisième point d'appui comprennent un ensemble vis/écrou actionné par un bouton moleté axialement solidaire du bâti.

9. Dispositif selon l'une quelconque des revendications précédentes, **caractérisé par le fait qu'**il comprend un moyen d'affichage indiquant une tension de courroie trop faible, correcte ou trop forte, ledit moyen d'affichage étant pourvu de voyants lumineux.

10. Dispositif selon l'une quelconque des revendications précédentes, **caractérisé par le fait que** le boîtier de contrôle et de commande regroupe les commandes et des moyens d'affichage.

11. Procédé de mesure et de contrôle de la tension d'une courroie entre un premier et un second points d'appui aptes à venir en contact avec une face d'une courroie, un troisième point d'appui disposé entre les deux premiers et apte à venir en contact avec une face opposée de la courroie, le troisième point d'appui étant apte à un déplacement relatif sur une course égale à la somme de l'épaisseur de la courroie et d'une constante L avec arrêt en butée à une distance constante par rapport aux deux premiers points d'appui pour exercer sur la courroie un effort transversal tendant à la plaquer sur les deux premiers points d'appui, la réaction de la courroie sur le troisième point d'appui étant mesurée, dans lequel on stocke dans une mémoire des courbes de correspondance entre la réaction de la courroie et la tension de la courroie, selon le type de courroie, on met en mémoire les caractéristiques de la courroie à mesurer, on convertit en tension de la courroie la réaction de la courroie en fonction d'une courbe sélectionnée en fonction du type de courroie, une tension préconisée de courroie étant établie au moyen d'un algorithme en fonction du type de courroie, la conversion et l'algorithme étant mis en oeuvre par un microcontrôleur disposé dans un boîtier de contrôle et de commande

12. Procédé selon la revendication 11, **caractérisé par le fait qu'**on affiche la tension calculée de la courroie.

13. Procédé selon la revendication 11 ou 12, **caractérisé par le fait qu'**on compare la tension calculée de la courroie à la tension préconisée et on affiche le résultat de la comparaison.

## Claims

1. Device for measuring and checking the tension in a belt, comprising a detection assembly (1) and a command and control unit (18), the detection assembly comprising a first and a second support point (6) which are able to come into contact with one side of a belt (16), a third support point (15) arranged between the first two and able to come into contact with an opposite side of the belt, means for moving the third support point relative to the first two support points so as to exert on the belt a transverse force tending to press it against the first two support points, and means for measuring the reaction of the belt against the third support point, **characterized in that** the command and control unit comprises a microcontroller, a memory, look-up curves giving the correspondence between the reaction of the belt on the third support point and the belt tension for each type of belt stored in the said memory, means for storing in memory the characteristics of the belt that is to be measured, and a calculation algorithm allowing the microcontroller to determine the recommended tension as a function of the type of belt being checked, the means for moving the third support point relative to the first two support points acting, in contact with the belt, over a travel equal to the sum of the thickness of the belt and a constant L.

2. Device according to Claim 1, **characterized in that** it comprises display means (27) for displaying the calculated tension in the belt.

3. Device according to Claim 1 or 2, **characterized in that** the microcontroller is able to compare the calculated tension in the belt with the recommended belt tension and **in that** it comprises means for displaying the result of the comparison (28-30).

4. Device according to any one of the preceding claims, **characterized in that** the first and second support points are fixed with respect to the detection assembly, the third support point being able to move with respect to the first two.

5. Device according to any one of Claims 1 to 3, **characterized in that** the third support point is fixed with respect to the detection assembly, the first and second support points being able to move with respect to the third support point.

6. Device according to any one of the preceding claims, **characterized in that** the first and second support points are distant from one another by a fixed distance.

7. Device according to any one of the preceding claims, **characterized in that** it comprises a means for stopping the means of relative movement of the third support point with respect to the first two points, at the end of the travel, in contact with the belt, equal to the sum of the thickness of the belt and the constant L.

8. Device according to any one of the preceding claims, **characterized in that** the means for relative movement of the third support point comprise a screw/nut system operated by a knurled knob axially secured to the frame.

9. Device according to any one of the preceding claims, **characterized in that** it comprises a display means indicating a belt tension that is too low, correct or too high, the said display means being provided with indicator lamps.

10. Device according to any one of the preceding claims, **characterized in that** the command and control unit groups together the commands and the display means.

11. Method for measuring and checking the tension in a belt between a first and a second support point which are able to come into contact with one side of a belt, a third support point arranged between the first two and able to come into contact with the opposite side of the belt, the third support point being able to be moved in a relative movement over a travel equal to the sum of the thickness of the belt and a constant L, it being stopped in abutment a constant distance from the first two support points so as to exert on the belt a transverse force tending to press it against the first two support points, the reaction of the belt on the third support point being measured, in which method look-up curves giving the correspondence between the reaction of the belt and the belt tension are stored in a memory according to the type of belt, the characteristics of the belt that is to be measured are stored in memory, the reaction of the belt is converted into a tension using a curve selected according to the type of belt, a recommended belt tension being established by means of an algorithm on the basis of the type of belt, the conversion and the algorithm being implemented by a microcontroller arranged in a command and control unit.

12. Method according to Claim 11, **characterized in that** the calculated belt tension is displayed.

13. Method according to Claim 11 or 12, **characterized in that** the calculated belt tension is compared with the recommended tension and the result of the comparison is displayed.

## Patentansprüche

1. Vorrichtung zum Messen und Prüfen der Spannung eines Riemens, die einen Erfassungsblock (1) und ein Prüf- und Steuergehäuse (18) aufweist, wobei der Erfassungsblock einen ersten und einen zweiten Auflagepunkt (6), die mit einer Fläche eines Riemens (16) in Kontakt kommen können, einen dritten Auflagepunkt (15), der zwischen den beiden ersten angeordnet ist und mit einer gegenüberliegenden Fläche des Riemens in Kontakt kommen kann, Mittel zur relativen Verschiebung des dritten Auflagepunkts bezüglich der beiden ersten Auflagepunkte, um auf den Riemen eine Querkraft auszuüben, die die Neigung hat, ihn auf die beiden ersten Auflagepunkte aufzulegen, und Mittel zum Messen der Reaktion des Riemens auf dem dritten Auflagepunkt aufweist, **dadurch gekennzeichnet, dass** das Prüf- und Steuergehäuse einen Mikrocontroller, einen Speicher, Entsprechungskurven zwischen der Reaktion des Riemens auf dem dritten Auflagepunkt und der Riemenspannung für jede Art von im Speicher gespeicherten Riemen, Mittel, um die Eigenschaften des zu messenden Riemens zu speichern, und einen Rechenalgorithmus aufweist, der es dem Mikrocontroller ermöglicht, die empfohlene Spannung in Abhängigkeit von der Art des geprüften Riemens zu bestimmen, wobei die Mittel zur relativen Verschiebung des dritten Auflagepunkts bezüglich der beiden ersten Auflagepunkte in Kontakt mit dem Riemen auf eine Strecke einwirken, die gleich der Summe der Dicke des Riemens und einer Konstanten L ist.

2. Vorrichtung nach Anspruch 1, **dadurch gekennzeichnet, dass** sie Anzeigemittel (27) für die berechnete Spannung des Riemens aufweist.

3. Vorrichtung nach Anspruch 1 oder 2, **dadurch gekennzeichnet, dass** der Mikrocontroller in der Lage ist, die berechnete Spannung des Riemens mit der empfohlenen Spannung des Riemens zu vergleichen, und dass er Mittel zur Anzeige des Vergleichsergebnisses (28-30) aufweist.

4. Vorrichtung nach einem der vorhergehenden Ansprüche, **dadurch gekennzeichnet, dass** der erste und der zweite Auflagepunkt in Bezug auf den Erfassungsblock fest sind, während der dritte Auflagepunkt bezüglich der beiden ersten beweglich ist.

5. Vorrichtung nach einem der Ansprüche 1 bis 3, **dadurch gekennzeichnet, dass** der dritte Auflagepunkt bezüglich des Erfassungsblocks fest ist, während der erste und der zweite Auflagepunkt bezüglich des dritten Auflagepunkts beweglich sind.

6. Vorrichtung nach einem der vorhergehenden Ansprüche, **dadurch gekennzeichnet, dass** der erste und der zweite Auflagepunkt einen festen Abstand zueinander aufweisen.

7. Vorrichtung nach einem der vorhergehenden Ansprüche, **dadurch gekennzeichnet, dass** sie ein Haltemittel für die Mittel zur relativen Verschiebung des dritten Auflagepunkts bezüglich der beiden ersten Punkte am Ende der Strecke in Kontakt mit dem Riemen aufweist, die gleich der Summe der Dicke des Riemens und der Konstanten L ist.

8. Vorrichtung nach einem der vorhergehenden Ansprüche, **dadurch gekennzeichnet, dass** die Mittel zur relativen Verschiebung des dritten Auflagepunkts eine Einheit aus Schraube und Mutter aufweisen, die von einem Rändelknopf betätigt wird, der axial fest mit dem Gehäuse verbunden ist.

9. Vorrichtung nach einem der vorhergehenden Ansprüche, **dadurch gekennzeichnet, dass** sie ein Anzeigemittel aufweist, das eine zu geringe, korrekte oder zu starke Spannung des Riemens anzeigt, wobei das Anzeigemittel mit Leuchtanzeigen versehen ist.

10. Vorrichtung nach einem der vorhergehenden Ansprüche, **dadurch gekennzeichnet, dass** das Prüf- und Steuergehäuse die Steuerungen und die Anzeigemittel umfasst.

11. Verfahren zum Messen und Prüfen der Spannung eines Riemens zwischen einem ersten und einem zweiten Auflagepunkt, die mit einer Fläche eines Riemens in Kontakt kommen können, mit einem dritten Auflagepunkt, der zwischen den beiden ersten angeordnet ist und mit einer gegenüberliegenden Fläche des Riemens in Kontakt kommen kann, wobei der dritte Auflagepunkt eine relative Verschiebung über eine Strecke gleich der Summe der Dicke des Riemens und einer Konstanten L durchführen kann, mit einem Anschlagstopp in einer konstanten Entfernung bezüglich der beiden ersten Auflagepunkte, um auf den Riemen eine Querkraft auszuüben, die die Neigung hat, ihn auf die beiden ersten Auflagepunkte aufzulegen, wobei die Reaktion des Riemens auf dem dritten Auflagepunkt gemessen wird, Verfahren, bei dem in einem Speicher Entsprechungskurven zwischen der Reaktion des Riemens und der Riemenspannung je nach Art des Riemens gespeichert werden, die Eigenschaften des zu messenden Riemens gespeichert werden, in Abhängigkeit von einer gemäß dem Riementyp gewählten Kurve die Reaktion des Riemens in Riemenspannung umgewandelt wird, wobei eine empfohlene Riemenspannung mittels eines Algorithmus in Abhängigkeit von der Art des Riemens erstellt wird, wobei die Umwandlung und der Algorithmus von einem Mikrocontroller angewandt werden, der in einem Prüf- und Steuergehäuse angeordnet ist.

12. Verfahren nach Anspruch 11, **dadurch gekennzeichnet, dass** die berechnete Spannung des Riemens angezeigt wird.

13. Verfahren nach Anspruch 11 oder 12, **dadurch gekennzeichnet, dass** die berechnete Spannung des Riemens mit der empfohlenen Spannung verglichen und das Ergebnis des Vergleichs angezeigt wird.
